# EUROPEAN PATENT SPECIFICATION

(11) **EP 2 775 374 B1**
(45) Date of publication and mention of the grant of the patent: **08.08.2018**
(21) Application number: 14156674.5
(22) Date of filing: 25.02.2014
(51) Int. Cl.: G06F 1/16, G06F 3/01, G06F 3/02, G06F 3/0481, G06F 3/0482, G06F 3/0484, G06F 3/00

(54) **User interface and method**
Benutzerschnittstelle und Verfahren
Interface utilisateur et procédé

(30) Priority: 04.03.2013 US 201313783507
(43) Date of publication of application: 10.09.2014
(73) Proprietor: Honeywell International Inc., Morris Plains, NJ 07950 (US)
(72) Inventor: Kannan, Kamal, Morristown, NJ New Jersey 07962-2245 (US); Ramaswami, Manikandan, Morristown, NJ New Jersey 07962-2245 (US)
(74) Representative: Houghton, Mark Phillip

(56) References cited:
- US-A1- 2008 200 205
- US-A1- 2009 285 443
- US-A1- 2010 229 194
- US-A1- 2012 178 431

## Description

### FIELD

The present invention relates generally to a user interface and method of using a user interface. More particularly, the present invention relates to a user interface for controlling home automation devices and a method of using a user interface to control home automation devices.

### BACKGROUND

Home automation devices are known in the art. For example, a home automation device can include a thermostat, lock, switch, security panel, and the like. Each home automation device can include a user interface.

Remote control devices and applications for controlling home automation devices are also known in the art. For example, a remote control device or application can include a user interface, which can be used to remotely control a home automation system.

US 2009/285443 A1 discloses remotely controlling a device with a mobile device having a camera to detect user control items of the controlled device. US 2008/200205 A1 and US 2012/178431 A1 disclose controlling an object having a first user interface by a remote control device having a viewing screen by displaying a user interface substantially identical to a user interface of the object to be controlled for controlling said object.

The user interface of a remote control device is different than the user interface of a home automation device. Therefore, a user will engage in different experiences depending on whether the user accesses the home automation device directly through the user interface of the home automation device or through the user interface of the remote control device. For example, the visual appearance and cues and/or the audio and sound indications of the user interfaces can vary. Accordingly, a learning curve may be associated with a user interface of a remote control device.

In view of the above, there is a continuing, ongoing need for an improved user interface.

### SUMMARY OF THE INVENTION

The present invention provides a method as defined in claim 1. The method may include the features of any one or more of dependent claims 2 to 4.

The present invention also provides a system as defined in claim 5. The method may include the features of any one or more of dependent claims 6 to 8.

### BRIEF DESCRIPTION OF THE DRAWINGS

FIG. 1 is a flow diagram of a method of remotely controlling an object recognized for the first time in accordance with disclosed embodiments;
FIG. 2 is a flow diagram of a method of remotely controlling an object that has previously been recognized in accordance with disclosed embodiments;
FIG. 3 is a block diagram of a remote control device for carrying out the methods of FIG. 1, FIG. 2, and others in accordance with disclosed embodiments; and
FIG. 4 is a perspective view of a system for carrying out the methods of FIG. 1, FIG. 2, and others in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention.

Embodiments disclosed herein include a user interface of a remote control device or application that can be used to control a plurality of different home automation devices. In some embodiments, the user interface of the remote control device can be substantially identical to the user interface of the home automation device that the remote control device is controlling. That is, a user can engage in a substantially identical experience regardless of whether the user is accessing a home automation device directly through the home automation device's user interface or through a user interface of the remote control device. Because the user interface on the remote control application "matches" the user interface on the home automation device, a user's experience when using the user interface on the remote control device can be more intuitive, and any learning curve can be reduced.

The remote control device disclosed herein can include a cellular phone, smart phone, personal digital assistance, or any other remote control device as would be known by those of skill in the art. For example, in some embodiments, a software application can be downloaded and/or loaded onto the remote control device.

In accordance with disclosed embodiments, the user interface of the remote control device can change depending on the home automation device that the remote control device is controlling. For example, when the remote control device is controlling a first home automation device, the remote control device can display a first user interface that is substantially identical to a user interface of the first home automation device. However, when the remote control device is controlling a second home automation device, the remote control device can display a second user interface that is substantially identical to a user interface of the second home automation device.

Some embodiments of the remote control device disclosed herein can include a mechanism to identify a device or object to be controlled, for example, a home automation system to be controlled. For example, the remote control device can include a camera or other image capturing device to capture an image of the device or object. When an image is captured, embodiments disclosed herein can compare the captured image with a plurality of stored images, for example, in a training library. The device or object in the captured image can be recognized when embodiments disclosed herein match the captured image with one of the plurality of stored images.

After the device or object to be controlled is recognized, embodiments disclosed herein can provide and display a user interface on the remote control device for controlling the device or object. Embodiments disclosed herein can also associate the displayed user interface with the device or object. In some embodiments, the user interface that is displayed on the remote control device can be substantially identical to the user interface of the device or object itself. In some embodiments, three-dimensional rendering can be employed to display the device or object's user interface on the remote control device.

In some embodiments, when a device or object to be controlled is recognized, embodiments disclosed herein can provide a live status update for the device or object and/or facilitate a user's ability to remotely control the device or object. In some embodiments, events or videos related to the device and/or a list of items, such as a switch or lock, that are associated with the device or object can also be displayed to the user.

In some embodiments, when a device or object to be controlled is recognized, for example, when the device or object is recognized for the first time, coordinates can be identified and associated with the device or object. For example, in some embodiments, the coordinates of the user, the remote control device, and/or the camera or other image capturing device can be identified. In some embodiments, the coordinates of the recognized device or object to be controlled can be identified.

In some embodiments, the coordinates can be identified in relation to compass directions. In some embodiments, the coordinates can be identified as a location within a region, for example, a relative position with respect to other objects in the region. In some embodiments, the coordinates can be identified as geographic coordinates or as GPS coordinates.

The remote control device disclosed herein can continue to be used to remotely control a device or object after the coordinates of the device or object have been identified. For example, in some embodiments, when the camera or image capturing device is panned to an object or device that has previously been recognized, the user interface can provide and display the user interface associated with the object or device to be controlled. That is, embodiments disclosed herein can identify the current coordinates as being the same as previously identified coordinates, can identify the object or device associated with the current coordinates, and can provide and display the user interface associated with the identified object or device.

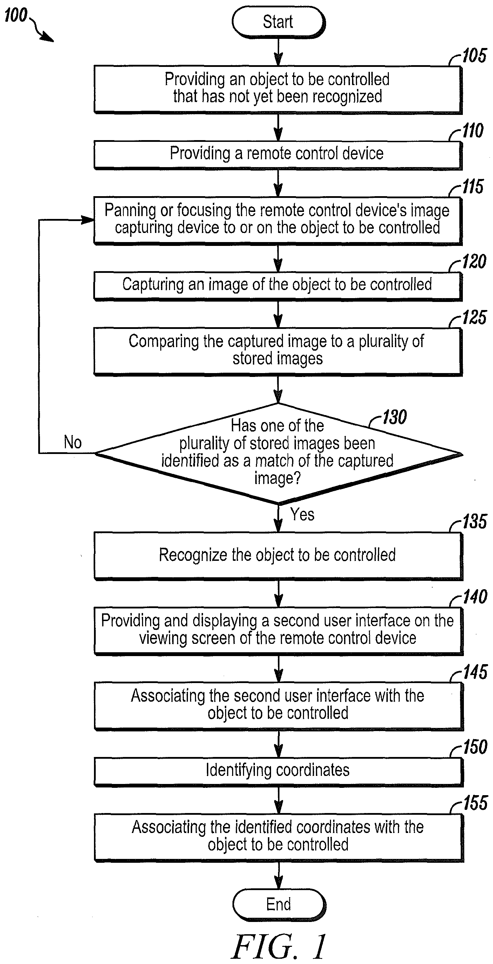

FIG. 1 is a flow diagram of a method 100 of remotely controlling an object recognized for the first time in accordance with disclosed embodiments. As seen in FIG. 1, the method 100 can include providing an object to be controlled that has not yet been recognized as in 105. For example, the object to be controlled can have a first user interface. The method 100 can also include providing a remote control device as in 110. For example, the remote control device can include a viewing screen and an image capturing device, such as a camera.

The method 100 can include panning or focusing the remote control device's image capturing device to or on the object to be controlled as in 115. Then, the method 100 can include capturing an image of the object to be controlled as in 120 and comparing the captured image to a plurality of stored images as in 125. When the method 100 determines that one of the plurality of stored images has been identified as a match of the captured image as in 130, the method 100 can recognize the object to be controlled as in 135.

After the object to be controlled has been recognized as in 135, the method 100 can include providing and displaying a second user interface on the viewing screen of the remote control device as in 140. For example, the second user interface can be substantially identical to the first user interface of the object to be controlled. The method can also include associating the second user interface with the object to be controlled as in 145.

Finally, the method 100 can include identifying coordinates as in 150 and associating the identified coordinates with the object to be controlled as in 155.

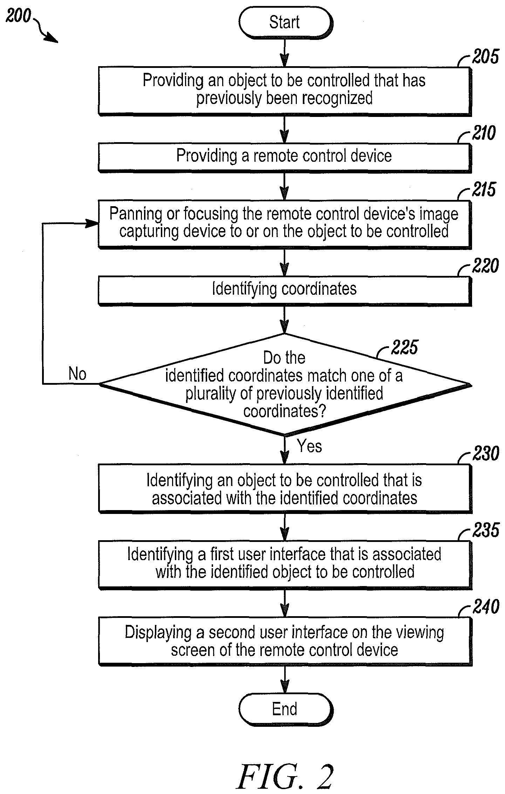

FIG. 2 is a flow diagram of a method 200 of remotely controlling an object that has previously been recognized in accordance with disclosed embodiments. As seen in FIG. 2, the method 200 can include providing an object to be controlled that has previously been recognized as in 205. For example, the object to be controlled can have a first user interface. The method 200 can also include providing a remote control device as in 210. For example, the remote control device can include a viewing screen and an image capturing device, such as a camera.

The method 200 can include panning or focusing the remote control device's image capturing device to or on the object to be controlled as in 215. Then, the method 200 can include identifying coordinates as in 220 and determining that the coordinates identified in step 220 match one of a plurality of previously identified coordinates as in 225. For example, the method 200 can determine that the coordinates identified in step 220 match the coordinates identified in step 150 of the method 100.

Then, the method 200 can include identifying an object to be controlled that is associated with the coordinates identified in step 220 as in 230. For example, the method 200 can identify the object to be controlled that was associated with the coordinates in step 155 of the method 100.

The method 200 can also include identifying a first user interface that is associated with the object to be controlled identified in step 230 as in 235. For example, the method 200 can identify the first user interface that was associated with the object to be controlled in step 145 of the method 100.

Finally, the method 200 can include displaying a second user interface on the viewing screen of the remote control device as in 240. For example, the second user interface can be substantially identical to the first user interface that was identified in step 235..

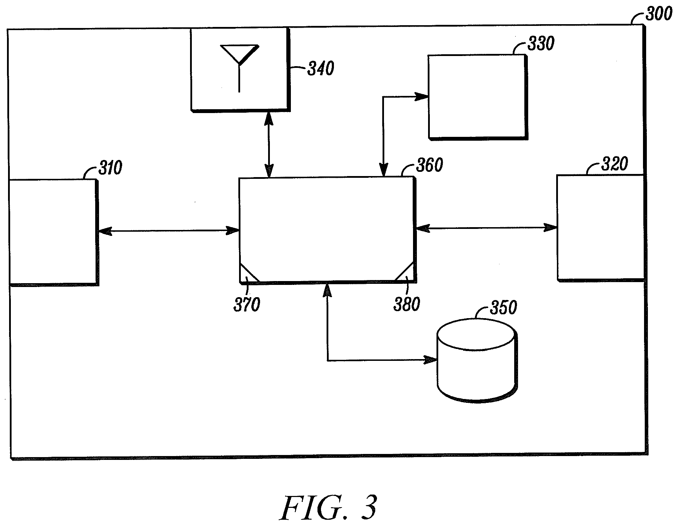

FIG. 3 is a block diagram of a remote control device 300 for carrying out the methods of FIG. 1, FIG. 2, and others in accordance with disclosed embodiments. As seen in FIG. 3, the device 300 can include a viewing screen 310, an image capturing device 320, a coordinate determining device 330, a wired and/or wireless transceiver 340, a memory device 350, control circuitry 360, one or more programmable processors 370, and executable control software 380. The executable control software 380 can be stored on a transitory or non-transitory computer readable medium, including but not limited to, computer memory, RAM, optical storage media, magnetic storage media, flash memory, and the like. In some embodiments, the executable control software 380 can execute the steps of the methods 100 and 200 shown in FIG. 1 and FIG. 2, respectively, as well as others disclosed herein.

The image capturing device 320 can pan or focus to or on an object to be controlled and to capture an image of the object to be controlled. For example, in some embodiments, the image capturing device 320 can include a camera. In some embodiments, the captured image can be stored in the memory device 350. In some embodiments, the captured image can be sent, via the transceiver 340, to a displaced system, server, or memory device.

When the captured image is compared to a plurality of stored images, the plurality of stored images can be retrieved from the memory device 350 or, via the transceiver 340, from a displaced system, server, or memory device.

A plurality of user interfaces can be displayed on the viewing screen 310. For example, a user interface that is substantially identical to a user interface of an object to be controlled can be displayed on the viewing screen 310. In some embodiments, the viewing screen 310 can display interactive and viewing windows. In some embodiments, the viewing screen 310 can be a multi-dimensional graphical user interface and can include input and output mechanisms as would be understood by those of ordinary skill in the art.

The coordinate determining device 330 can identify coordinates in accordance with embodiments disclosed herein. For example, in some embodiments, the coordinate determining device 330 can include a compass and/or a GPS receiver. In some embodiments, the identified coordinates can be stored in the memory device 350. In some embodiments, the identified coordinates can be sent, via the transceiver 340, to a displaced system, server, or memory device.

When an object to be controlled that is associated with identified coordinates is identified, the association data and/or the identification of the object to be controlled can be retrieved from the memory device 350 or, via the transceiver 340, from a displaced system, server, or memory device. Similarly, when the user interface that is associated with the identified object to be controlled is identified, the association data and/or the identification of the user interface can be retrieved from the memory device 350 or, via the transceiver 340, from a displaced system, server, or memory device.

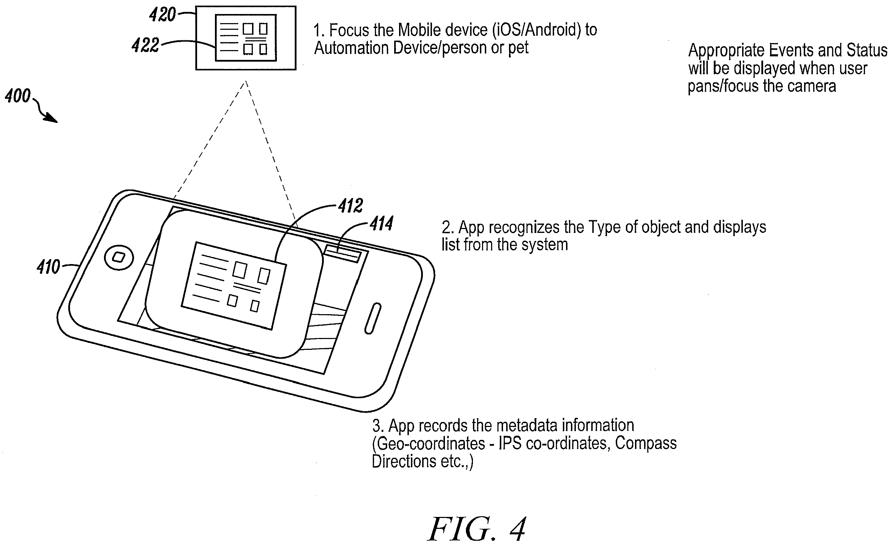

FIG. 4 is a perspective view of a system 400 for carrying out the methods of FIG. 1, FIG. 2 and others in accordance with disclosed embodiments. As seen in FIG. 4, the system 400 can include a remote control device 410 and an object to be controlled 420. For example, in some embodiments, the object to be controlled 420 can include a home automation device.

A camera or other type of image capturing device associated with the remote control device 410 can capture an image of the object to be controlled 420. Then, the device 410 and/or a software application running therein can recognize the object 420, display a user interface 412 on the viewing screen 414 of the device 410 that is substantially identical to a user interface 422 of the object 420, and identify coordinates, for example, from extracted metadata of the captured image, in accordance with embodiments disclosed herein. Alternatively, the device 410 and/or software application running therein can first identify coordinates in accordance with embodiments disclosed herein and then identify the object 420 associated with the identified coordinates, identify a user interface 422 associated with the identified object 420, and display the user interface 412 on the viewing screen 414 of the device 410, where the displayed user interface 412 is substantially identical to the identified user interface 422.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems.

From the foregoing, it will be observed that numerous variations and modifications may be effected without departing from the scope of the invention. It is to be understood that no limitation with respect to the specific system or method described herein is intended or should be inferred. It is, of course, intended to cover all such modifications as fall within the scope of the invention.

## Claims

1. A method for controlling a device to be controlled (420), the method comprising:
capturing (115), by an image capturing device (320) of a remote control device (300, 410), an image of the device to be controlled (420), wherein the device to be controlled (420) includes a first user interface;
displaying (140, 240) a second user interface associated with the device to be controlled (420) on a viewing screen (310) of the remote control device (300, 410), wherein the second user interface is identical to the first user interface and is used for controlling the device to be controlled (420), **characterized in that** the method further comprises:
recognizing (135) the device to be controlled (420) for a first time by comparing the image with a plurality of stored images and, responsive thereto, displaying (140) the second user interface;
associating (155) first coordinates with the device to be controlled (420), the first coordinates identified while recognizing the device to be controlled (420) for the first time; and, after the device to be controlled has been recognized for the first time, identifying (235) the device to be controlled (420) based on matching currently identified (220) coordinates of the device to be controlled (420) with the first coordinates and, responsive thereto, displaying (240) the second user interface.

2. The method for controlling the device to be controlled (420) of claim 1 wherein the device to be controlled (420) includes an automation device.

3. The method for controlling the device to be controlled (420) of claim 1 wherein the remote control device (300, 410) includes one of a cellular phone, a personal digital assistant and a smart phone.

4. The method for controlling the device to be controlled (420) of claim 1 wherein the first coordinates and the currently identified coordinates include compass directions, geographic coordinates or GPS coordinates.

5. A system for controlling a device to be controlled (420) comprising:
the device to be controlled (420), wherein the device to be controlled (420) includes a first user interface; and
a remote control device (300, 410), wherein the remote control device (300, 410) includes a viewing screen (310) and an image capturing device (320), wherein the image capturing device (320) is configured to capture (115) an image of the device to be controlled (420), wherein the remote control device (300, 410) is configured to display (140, 240) a second user interface of the device to be controlled (420) on the viewing screen (310) of the remote control device (300, 410), wherein the second user interface is identical to the first user interface and is used for controlling the device to be controlled (420); wherein the system is **characterized in that**:
the remote control device (300, 410) is configured to recognize (135) the device to be controlled (420) for a first time by comparing the image with a plurality of stored images and, responsive thereto, is configured to display (140) the second user interface and to associate (155) first coordinates with the device to be controlled (420), wherein the first coordinates are identified (150) while the remote control device (300, 410) recognizes the device to be controlled (420) for the first time; and, after the device to be controlled (420) has been recognized for the first time, the remote control device (300, 410) is configured to identify (235) the device to be controlled (420) based on matching currently identified (220) coordinates of the device to be controlled (420) with the first coordinates and, responsive thereto, to display (240) the second user interface.

6. The system for controlling the device to be controlled (420) of claim 5 wherein the device to be controlled (420) includes an automation device.

7. The system for controlling the device to be controlled (420) of claim 5 wherein the remote control device (300, 410) includes one of a cellular phone, a personal digital assistant and a smart phone.

8. The system for controlling the device to be controlled (420) of claim 5 wherein the first coordinates and the currently identified coordinates include compass directions, geographic coordinates or GPS coordinates.

## Patentansprüche

1. Verfahren zum Steuern einer zu steuernden Vorrichtung (420), wobei das Verfahren Folgendes umfasst:
Aufnehmen (115) durch eine Bildaufnahmevorrichtung (320) einer Fernsteuervorrichtung (300, 410) eines Bildes der zu steuernden Vorrichtung (420), wobei die zu steuernde Vorrichtung (420) eine erste Anwenderschnittstelle enthält;
Anzeigen (140, 240) einer zweiten Anwenderschnittstelle, die der zu steuernden Vorrichtung (420) zugeordnet ist, auf einem Betrachtungsbildschirm (310) der Fernsteuervorrichtung (300, 410), wobei die zweite Anwenderschnittstelle mit der ersten Anwenderschnittstelle identisch ist und zum Steuern der zu steuernden Vorrichtung (420) verwendet wird,
**dadurch gekennzeichnet, dass** das Verfahren ferner Folgendes umfasst:
Erkennen (135) der zu steuernden Vorrichtung (420) zum ersten Mal durch Vergleichen des Bildes mit mehreren gespeicherten Bildern und als Reaktion darauf Anzeigen (140) der zweiten Anwenderschnittstelle;
Zuordnen (155) erster Koordinaten zu der zu steuernden Vorrichtung (420), wobei die ersten Koordinaten identifiziert werden, während die zu steuernde Vorrichtung (420) zum ersten Mal erkannt wird; und
nachdem die zu steuernde Vorrichtung zum ersten Mal erkannt wurde, Identifizieren (235) der zu steuernden Vorrichtung (420) anhand des Anpassens von derzeit identifizierten (220) Koordinaten der zu steuernden Vorrichtung (420) an die ersten Koordinaten und als Reaktion darauf Anzeigen (240) der zweiten Anwenderschnittstelle.

2. Verfahren zum Steuern der zu steuernden Vorrichtung (420) nach Anspruch 1, wobei die zu steuernde Vorrichtung (420) eine Automatisierungsvorrichtung enthält.

3. Verfahren zum Steuern der zu steuernden Vorrichtung (420) nach Anspruch 1, wobei die Fernsteuervorrichtung (300, 410) ein Mobilfunktelefon und/oder einen persönlichen digitalen Assistenten und/oder ein Smartphone enthält.

4. Verfahren zum Steuern der zu steuernden Vorrichtung (420) nach Anspruch 1, wobei die ersten Koordinaten und die derzeit identifizierten Koordinaten Kompassrichtungen, geographische Koordinaten oder GPS-Koordinaten enthalten.

5. System zum Steuern einer zu steuernden Vorrichtung (420), das Folgendes umfasst:
die zu steuernde Vorrichtung (420), wobei die zu steuernde Vorrichtung (420) eine erste Anwenderschnittstelle enthält; und
eine Fernsteuervorrichtung (300, 410), wobei die Fernsteuervorrichtung einen Betrachtungsbildschirm (310) und eine Bildaufnahmevorrichtung (320) enthält,
wobei die Bildaufnahmevorrichtung (320) konfiguriert ist, ein Bild der zu steuernden Vorrichtung (420) aufzunehmen,
wobei die Fernsteuervorrichtung (300, 410) konfiguriert ist, eine zweite Anwenderschnittstelle der zu steuernden Vorrichtung (420) auf dem Betrachtungsbildschirm (310) der Fernsteuervorrichtung (300, 410) anzuzeigen (140, 240),
wobei die zweite Anwenderschnittstelle mit der ersten Anwenderschnittstelle identisch ist und zum Steuern der zu steuernden Vorrichtung (420) verwendet wird; wobei das System **dadurch gekennzeichnet ist, dass**:
die Fernsteuervorrichtung (300, 410) konfiguriert ist, die zu steuernde Vorrichtung (420) zum ersten Mal durch Vergleichen des Bildes mit mehreren gespeicherten Bildern zu erkennen, und als Reaktion darauf konfiguriert ist, die zweite Anwenderschnittstelle anzuzeigen (140) und erste Koordinaten zu der zu steuernden Vorrichtung (420) zuzuordnen (155),
wobei die ersten Koordinaten identifiziert werden (150), während die Fernsteuervorrichtung (300, 410) die zu steuernde Vorrichtung (420) zum ersten Mal erkennt; und
nachdem die zu steuernde Vorrichtung (420) zum ersten Mal erkannt wurde, die Fernsteuervorrichtung (300, 410) konfiguriert ist, die zu steuernde Vorrichtung (420) anhand des Anpassens von derzeit identifizierten (220) Koordinaten der zu steuernden Vorrichtung (420) an die ersten Koordinaten zu identifizieren (235) und als Reaktion darauf die zweite Anwenderschnittstelle anzuzeigen (240).

6. System zum Steuern der zu steuernden Vorrichtung (420) nach Anspruch 5, wobei die zu steuernde Vorrichtung (420) eine Automatisierungsvorrichtung enthält.

7. System zum Steuern der zu steuernden Vorrichtung (420) nach Anspruch 5, wobei die Fernsteuervorrichtung (300, 410) ein Mobilfunktelefon und/oder einen persönlichen digitalen Assistenten und/oder ein Smartphone enthält.

8. Verfahren zum Steuern der zu steuernden Vorrichtung (420) nach Anspruch 5, wobei die ersten Koordinaten und die derzeit identifizierten Koordinaten Kompassrichtungen, geographische Koordinaten oder GPS-Koordinaten enthalten.

## Revendications

1. Procédé de commande d'un dispositif à commander (420), le procédé comprenant :
la capture (115), par un dispositif de capture d'images (320) d'un dispositif de télécommande (300, 410), d'une image du dispositif à commander (420), dans lequel le dispositif à commander (420) comporte une première interface utilisateur ;
l'affichage (140, 240) d'une seconde interface utilisateur associée au dispositif à commander (420) sur un écran de visualisation (310) du dispositif de télécommande (300, 410), dans lequel la seconde interface utilisateur est identique à la première interface utilisateur et est utilisée pour commander le dispositif à commander (420),
**caractérisé en ce que** le procédé comprend en outre :
la reconnaissance du dispositif à commander (420) une première fois en comparant l'image à une pluralité d'images mémorisées et, en réponse à cela, l'affichage (140) de la seconde interface utilisateur ;
l'association (155) de premières coordonnées au dispositif à commander (420), les premières coordonnées étant identifiées lors de la reconnaissance du dispositif à commander (420) la première fois ; et
après que le dispositif à commander (420) a été reconnu la première fois, l'identification (235) du dispositif à commander (420) en comparant des coordonnées présentement identifiées (220) du dispositif à commander (420) aux premières coordonnées et, en réponse à cela, l'affichage (240) de la seconde interface utilisateur.

2. Procédé de commande du dispositif à commander (420) selon la revendication 1 dans lequel le dispositif à commander (420) comporte un dispositif d'automatisation.

3. Procédé de commande du dispositif à commander (420) selon la revendication 1 dans lequel le dispositif de télécommande (300, 410) comporte l'un d'un téléphone cellulaire, d'un assistant numérique personnel et d'un téléphone intelligent.

4. Procédé de commande du dispositif à commander (420) selon la revendication 1 dans lequel les premières coordonnées et les coordonnées présentement identifiées comportent des directions de boussole, des coordonnées géographiques ou des coordonnées GPS.

5. Système de commande d'un dispositif à commander (420) comprenant :
le dispositif à commander (420), le dispositif à commander (420) comportant une première interface utilisateur ; et
un dispositif de télécommande (300, 410), le dispositif de télécommande (300, 410) comportant un écran de visualisation (310) et un dispositif de capture d'images (320),
dans lequel le dispositif de capture d'images (320) est configuré pour capturer une image du dispositif à commander (420),
dans lequel le dispositif de télécommande (300, 410) est configuré pour afficher (140, 240) une seconde interface utilisateur du dispositif à commander (420) sur l'écran de visualisation (310) du dispositif de télécommande (300, 410),
dans lequel la seconde interface utilisateur est identique à la première interface utilisateur et
est utilisée pour commander le dispositif à commander (420) ;
le système étant **caractérisé en ce que** :
le dispositif de télécommande (300, 410) est configuré pour reconnaître (135) le dispositif à commander (420) une première fois en comparant l'image à une pluralité d'images mémorisées et, en réponse à cela, est configuré pour afficher (140) la seconde interface utilisateur et associer (155) des premières coordonnées au dispositif à commander (420),
dans lequel les premières coordonnées sont identifiées (150) pendant que le dispositif de télécommande (300, 410) reconnaît le dispositif à commander (420) la première fois, le dispositif de télécommande (300, 410) est configuré pour identifier le dispositif à commander (420) en comparant des coordonnées présentement identifiées (220) du dispositif à commander (420) aux premières coordonnées et, en réponse à cela, afficher (240) la seconde interface utilisateur.

6. Système de commande du dispositif à commander (420) selon la revendication 5 dans lequel le dispositif à commander (420) comporte un dispositif d'automatisation.

7. Système de commande du dispositif à commander (420) selon la revendication 5 dans lequel le dispositif de télécommande (300, 410) comporte l'un d'un téléphone cellulaire, d'un assistant numérique personnel et d'un téléphone intelligent.

8. Système de commande du dispositif à commander (420) selon la revendication 5 dans lequel les premières coordonnées et les coordonnées présentement identifiées comportent des directions de boussole, des coordonnées géographiques ou des coordonnées GPS.
